# EUROPEAN PATENT SPECIFICATION

(11) **EP 1 138 587 B1**
(45) Date of publication and mention of the grant of the patent: **22.08.2007**
(21) Application number: 01107594.2
(22) Date of filing: 27.03.2001
(51) Int. Cl.: B62K 11/04

(54) **A motorcycle frame**
Motorradrahmen
Cadre de motocyclette

(30) Priority: 31.03.2000 JP 2000096805
(43) Date of publication of application: 04.10.2001
(73) Proprietor: HONDA GIKEN KOGYO KABUSHIKI KAISHA, Tokyo (JP)
(72) Inventor: Okuma, Takanori c/o Kabushiki Kaisha Honda Gijutsu Kenkyusho, Wako-shi, Saitama (JP); Adachi, Eiji c/o Kabushiki Kaisha Honda Gijutsu Kenkyusho, Wako-shi, Saitama (JP)
(74) Representative: Quinterno, Giuseppe

(56) References cited:
- EP-A- 0 447 899
- US-A- 4 360 214
- PATENT ABSTRACTS OF JAPAN vol. 1999, no. 10, 31 August 1999 (1999-08-31) -& JP 11 129966 A (YAMAHA MOTOR CO LTD), 18 May 1999 (1999-05-18)
- PATENT ABSTRACTS OF JAPAN vol. 1998, no. 05, 30 April 1998 (1998-04-30) -& JP 10 007060 A (SUZUKI MOTOR CORP), 13 January 1998 (1998-01-13)

## Description

The present invention relates to a motorcycle and particularly relates to a motorcycle of the kind defined in the preamble of claim 1.

Japanese patent document published with No. JP-03031078 discloses a motorcycle of this kind with a frame provided with a pair of left and right main frames extending from a head pipe, above an engine and towards the rear, with a pair of left and right pivot plates arranged in a vertical direction behind the engine connecting to rear end sections of the main frames, and a front end of a rear cushion arm swingably supported at middle sections of the pivot plates.

Also, the pivot plate is provided with an upper part that extends upwards further than a rear end of the main frame, and laterally extending parts respectively curving inwards so as to form a tapered shape when viewed from the rear, and an upper part of a rear cushion is supported between left and right upper ends closest together.

With the above described structure of the related art, the position of the cross member is at substantially the same height as the rear end of the main frame. This means that a space enclosed by left and right pivot plates formed below an upper end rear cushion attachment section is vertically segmented by the cross member. However, this space is used for the arrangement of an intake passageway made up of a carburetor, an air cleaner and a connecting tube connecting the carburetor and air cleaner, and also a rear cushion, which means that it is necessary to maintain a sufficiently large space, and if this space is partitioned by the cross member the layout of these intake passageway components is made extremely difficult. In particular, in the case of mounting a four-cycle engine having a large cylinder head, the position of the intake passageway becomes higher and so layout is made even more difficult. The object of the present invention is to solve these problems.

This object is achieved by the motorcycle defined in claim 1.

The present invention has upper ends of left and right pivot plates extending further upwards than a mainframe, and a rear cross member is suspended between these upper ends, which means that a space enclosed between the left and right pivot plates lower down than the rear cross member can be kept sufficiently large and it is easy to arrange an intake passageway and a rear cushion in this section. As a result, even if the position of the intake passageway becomes high due to mounting a four-cycle engine, a variety of layouts are possible. It is also possible to use the space enclosed between the left and right mainframes in front of the rear cross member as a space for arranging a fuel tank, and it is possible to use the rear cross member as a support section for this fuel tank.

A rear cross member is suspended between upwardly extending sections formed on upper ends of left and right pivot plates and at a higher position than rear ends of a mainframe, which means that sufficient vehicle rigidity can be maintained, and it is easy to arrange a carburetor and a connecting tube etc. constituting an intake passageway and a rear cushion in this large space.

Therefore, it is possible to obtain a vehicle frame with a large degree of freedom with respect to layout of the above described components, with a simple structure having upwardly extending sections, extending upwards higher than rear sections of the main frame, provided on the left and right pivot plates, and simply changing the position of the rear cross member to a high position so that it is suspended between these two upwardly extending sections.

Also, even if the position of the intake passageway becomes higher as a result of the cylinder head position jutting out a lot at the top, as with a 4-cycle engine, arrangement of the intake passageway can be made easier.

Further, a space further forward than the rear cross member can be kept as a fuel tank storage space, which means that the fuel tank can be stored in this space, and it is possible to have a large volume fuel tank. Also, by making the rear cross member a fuel tank support member, it is possible to simply and reliably support the fuel tank, even if it has a large volume.

Embodiments of the invention will be described in the following, based on the drawings.
Fig. 1 is a side elevation of essential parts of an off-road motorcycle,
Fig. 2 is a drawing showing partial component arrangement above an engine from the side of the vehicle side surface side,
Fig. 3 is a drawing showing partial component layout of the same components from above the vehicle,
Fig. 4 is a drawing showing partial component layout above a pivot plate, from the side of the vehicle,
Fig. 5 is a side elevation showing partial component arrangement from the rear of the vehicle frame,
Fig. 6 is a drawing showing partial component layout from the front of the vehicle,
Fig. 7 is a side elevation of essential parts of a vehicle frame,
Fig. 8 is a plan view of a front half side of the vehicle frame,
Fig. 9 is a rear perspective view of the vehicle frame, and
Fig. 10 is a cross sectional view along line 10- 10 in Fig. 7.

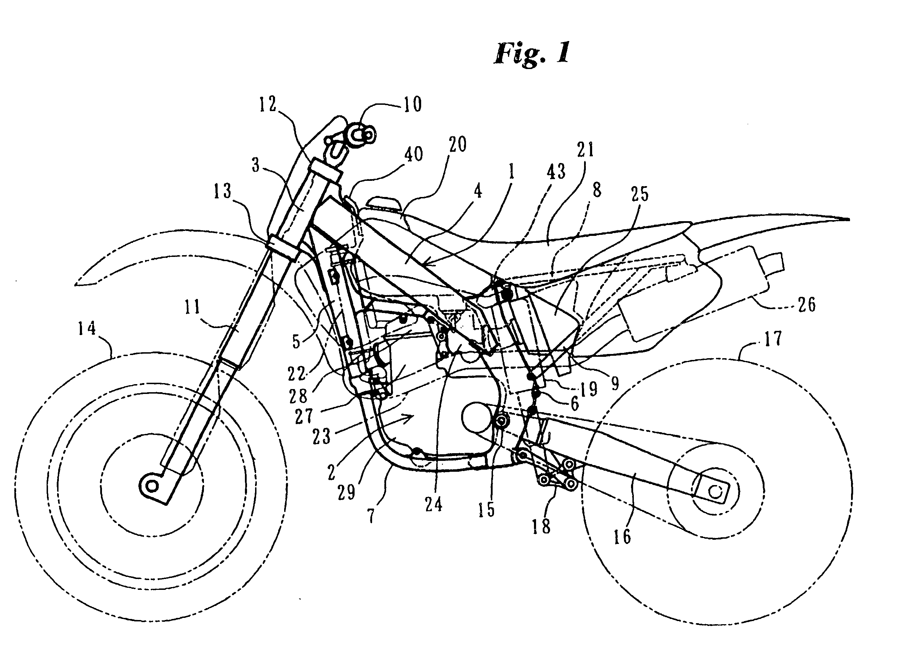

First of all, in Fig. 1, a vehicle frame 1 has a cradle shape and supports a water cooled 4-cycle engine 2, and comprises a pair of left and right mainframes 4 extending from a headpipe 3 over the engine 2 to the rear of the vehicle, a down tube 5 extending diagonally downwards from the head pipe 3 along a vehicle center line in front of the engine 2, a pair of left and right pivot plates 6 connecting to rear ends of respective left and right main frames 4 and arranged in a vertical direction to the rear of the engine 2, and a pair of left and right lower frames 7 passing underneath the engine 2 for connecting the down tube 5 and the lower ends of each of the pivot plates 6. Also, a pair of left and right seat rails 8 extend rearwards from upper end sections of the pivot plates 6, and rear end sections of the seat rails 8 and interstitial sections of the pivot plates are connected by a sloping rear caliper 9.

A pair of left and right front forks 11 steered by the handle 10 are rotatably supported on the headpipe 3 via a top bridge 12 and a bottom bridge 13. Reference numeral 14 is a front wheel.

Front ends of rear swing arms 16 are swingably supported between interstitial sections of the left and right pivot plates 6 using a pivot shaft 15, and a rear wheel is supported on rear ends of the rear swingarms 16. Also, a rear cushion 19 is attached between a link 18 provided on a front section of the rear swing arms and a rear cross member, that will be described later, provided on an upper end of the pivot plates, constituting a rear wheel suspension.

In the drawing, reference numeral 20 is a fuel tank supported between left and right main frames 4, 21 is a seat supported on the left and right seat rails 18, 22 is a radiator, 23 is an exhaust pipe, 24 is a carburetor, 25 is an air cleaner and 26 is a muffler.

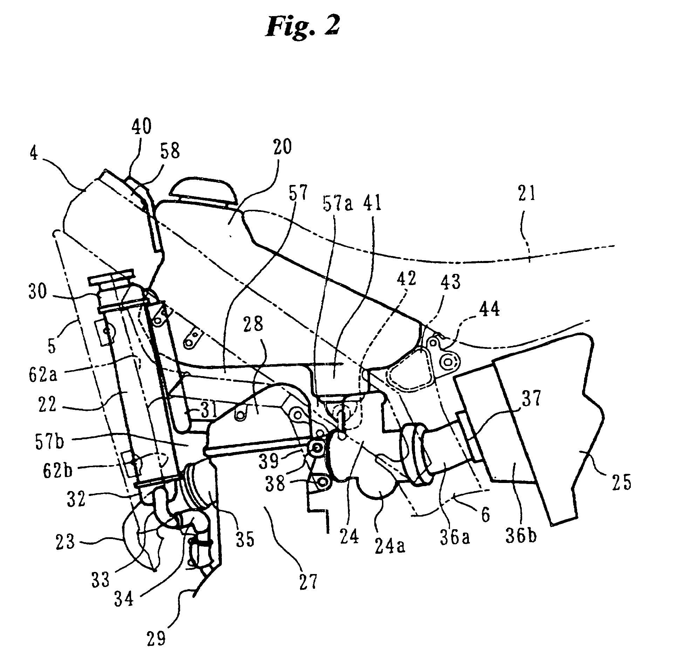

As shown in Fig. 2, the engine 2 is a water cooled 4-cycle engine, with a cylinder head 27 provided substantially upright, and a cylinder head cover 28 substantially forming a triangle viewed from the side, with a rear side of the cylinder head cover 28 fitted into an inner side of the main frames 4. An exhaust passageway 35 is provided in a central front section of the cylinder head 27, and an exhaust pipe 23 is connected to the exhaust passageway.

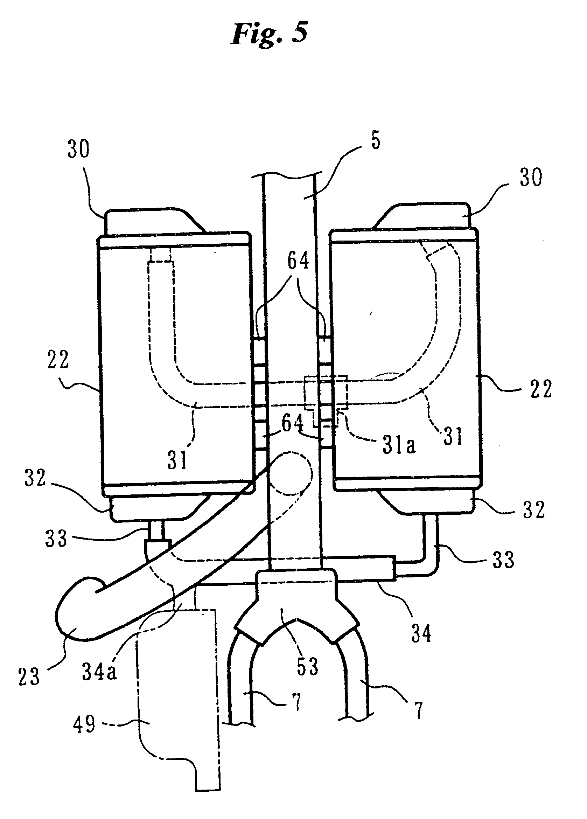

The radiator 22 is supported on both of the pair of left and right down tubes 5 (refer to Fig 5), and a return water side water hose 31 is piped between an upper tank 30 of the radiator and a cylinder head tank 28. A sending water side hose 33 extends from a lower tank 32, and connects to a crankcase 29 side.

A carburetor 24 is conected to an intake port provided on a rear surface side of the cylinder head 27, and an intake upstream side of the carburetor 24 is connected to an air cleaner 25 via a connecting tube 36. The connecting tube 36 is arranged so that a section in the vicinity of a joining part of a rear end of the main frame 4, at an upper part of the pivot plate 6 of the main frame 4, is traversed when viewed from the side.

The connecting tube 36 is longitudinally divided at a middle section, to form a front section 36a and a rear section 36b, the rear section 36b being integrally attached to a rear surface of the air cleaner 25. The front section 36a and the rear section 36b can be detachably connected using a dividing position 37. The dividing position 37 is positioned to the rear of a rear edge section of the pivot plate 6, which means that there is no obstruction of the pivot plate 6, assembly of the front section 36a and the rear section 36b becomes easy, and maintainability is improved.

A fuel tank 20 is supported by attaching a front end to a boss 58 positioned on an upper part of the main frame 4 using a bracket 40 with bolts or the like, and a rear section is supported on a rear cross member 43, that will be described later, provided between upper ends of the left and right pivot plates.

The sump-like section 41 is arranged projecting to the rear of the cylinder head 27 and cylinder head cover 28 projecting above the 4-cycle engine 2, and into the inside of a sump-like space 57a formed in front of the rear cross member 43, and has a height that overlaps the cylinder head cover 28 in the longitudinal direction of the vehicle, and is positioned overlapping an upper part of the carburetor 24 when viewed from the side.

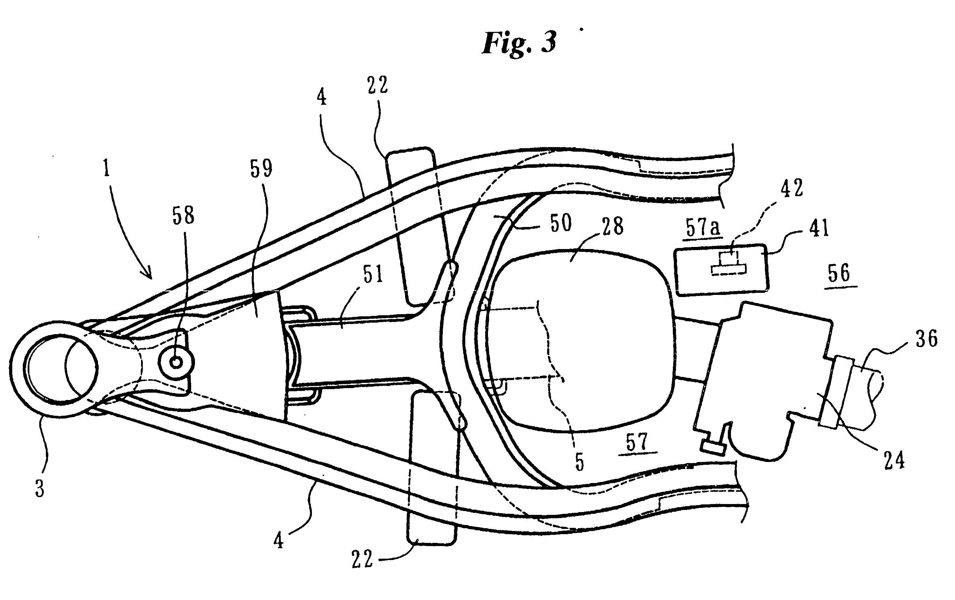

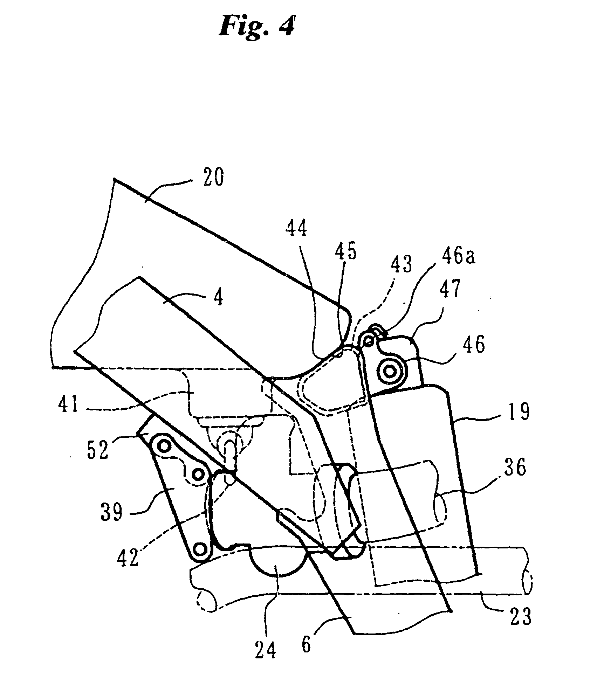

As is clear from Fig. 4, the position of a cock 42 provided below the sump-like section 41 is such that a lower end projects slightly down from a lower edge of the main frame 4 when viewed from the side, and the sump-like section 41 is positioned to overlap the main frame 4. As is also clear from Fig. 3, the sump-like section 41 is provided next to the carburetor 24 in the width-wise direction of the vehicle.

As shown in Fig. 1, with respect to support of the engine 2, an upper section is supported by the mainframe 1, a front side is supported by a down tube lower section, the lower side is supported by a central section of the lower frame 7, and a rear section has a crankcase 29 supported by the pivot plates 6 using a pivot shaft 15. Among these sections, the upper section is supported on a lower surface of the main frame 4, via a hanger bracket 39, by a support section 38 provided on a rear section of the cylinder head 27, as shown in Fig. 2 and Fig. 4.

Next, component layout in the vicinity of the down tube 5 will be described. Fig. 5 shows the down tube 5 and components around the down tube 5, for the layout of the radiators 22, from the front of the vehicle. The radiators 22 are provided on the left and right, with respective upper tanks 30 being connected by a return water hose 31, and connected to a water jacket outlet on the cylinder head cover 28 side by a joint pipe 31a.

Also, sending water hoses 33 from each of lower tanks 32 extend to the center of the vehicle, are connected to a joint hose 34 traversing in a lateral direction across the rear of a tapered section 62b of the down tube 5, and are also connected to a water pump 49 provided on the right side of the crankcase by a joint section 34a provided on the right side of the joint hose 34. An exhaust pipe 23 also passes behind the tapered section 62b, slopes downwards jutting out to the right side of the vehicle, passes below the right side radiator 22 and extends to the rear.

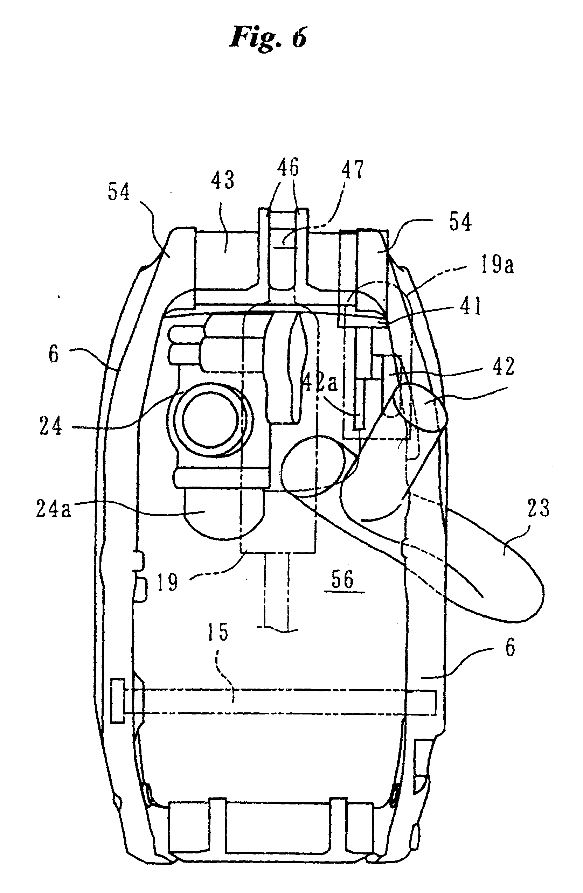

Next, component layout in a space 56 formed below the rear cross member 43 will be described. Fig. 6 shows these components from the rear of the vehicle. Inside this space a carburetor 24 is arranged at a position below the vicinity of the rear cross member 43 and approaching the left side of the vehicle, a sump-like section 41 and a cock 42 provided underneath the bottom of the sump-like section 41 are positioned on the right side of the carburetor 24, and a fuel tube 42a extending downwards from the cock 42 is connected to a float chamber 24a of the carburetor 24. The height of the cock 24 is slightly higher than the float chamber 24a.

Also, a rear cushion 19 is positioned to the rear of these components, and in the vicinity of the center of the vehicle, and the fuel cock 42 is positioned so as to overlap to the front of a reserve tank 19a aligned with the rear cushion 19. An exhaust pipe is also arranged passing below each of the fuel cock 42 and the reserve tank 19a. A front part of the exhaust pipe 23 juts out at a sloping right side from the front of the cylinder head 27 and then curves again towards the inside of the vehicle (refer to Fig. 5), passes an inner side of the pivot plate 6 on a rear right side and underneath each of the fuel cock 42 and the reserve tank 19a, as described above, and extends to the rear while curving slightly to the rear, and to the right of the vehicle and upwards. The exhaust pipe 23 and a connecting tube (not shown in this drawing) connected to the carburetor 24 are arranged respectively dividing to the left and right sides of the rear cushion 19.

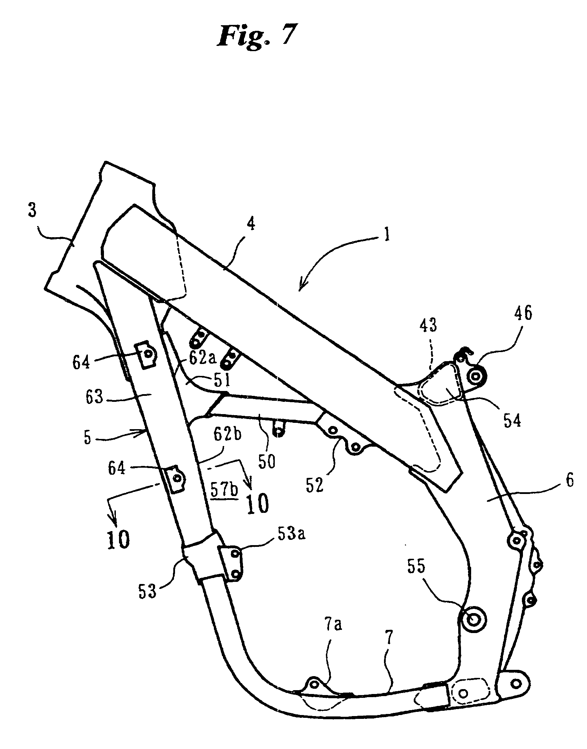

Next, the structure of the vehicle frame 1 will be described in detail using Fig. 7 to Fig. 10. The main frame 4 has a member formed by extruding an aluminum alloy so as to have a longitudinal rectangular cross section, with a front end being welded to the headpipe 3 and a rear end being welded to an upper part of the pivot plate 6.

The down tube 5 is formed from an angular pipe of aluminum alloy or the like, with a rear surface side of a lower section being formed into a tapered shape using a swaging process, a rear surface upper section and lower surfaces of each of the middle parts of the left and right main frames 4 being horizontal when viewed from the side, and connection being reinforced by a tension pipe 50 having an arched shape pointing towards the front when viewed in plan.

A front end of the tension pipe 50 is linked to the down tube 5 by a gusset 51, and an attachment stay of a hanger bracket 39 is provided on a rear end of the tension pipe 50 and a welded section of the main frame 4. A lower part of the down tube 5 is welded to a front end of a lower frame 7 formed from an angular aluminum alloy pipe divided into left and right sections, via a joint member 53.

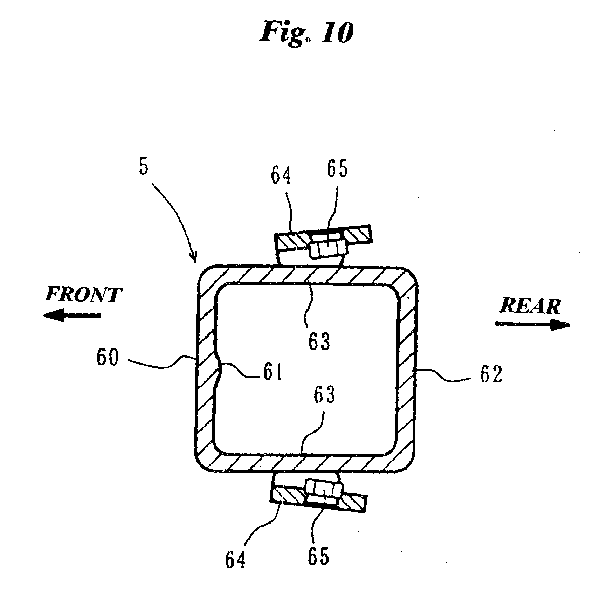

Fig. 10 is a side cross section of the down tube 5, and of the four surfaces, a rib 61 for linking in a length direction is integrally formed on an inner middle surface of the front surface 60. A rear surface 62 has a lower half side forming a tapered section 62b, that will be described later, gradually becoming thinner towards the bottom. However, the rear surface upper section 62a of the upper half side is formed into a straight section. Also, L-shaped radiator attachment sections 64 are welded to the outside of each of the left and right side surfaces 63, weld nuts 65 are provided on the attachment sections 64, and the left and right radiators 2 are bolt fastened.

As is clear from Fig. 7, the tapered section 62b is only provided on the rear surface 62, and a space 57b is formed behind the tapered section 62b, and between the cylinder head 27 and the front of the cylinder head cover 28. Other sections, namely an upper rear surface 62a, a front surface 60 and left and right side surfaces 63 are not tapered, and are all straight surfaces. Specifically, because of the tapered section 62b, the down tube 5 has an asymmetrical shape when viewed from the side.

To make the down tube 5 in this kind of shape, an angular cross section pipe is previously extruded with a specified cross section with an integral rib 61, and by performing a swaging process to compress the pipe only from 4 orthogonal directions, it is possible to form only specific surfaces to a tapered shape of only a required length. This type of swaging process is well known, and by doing this it is possible to arbitrarily thicken a part of the inner surface of the down tube 5, and it is also easy to form the rib 61 of this embodiment.

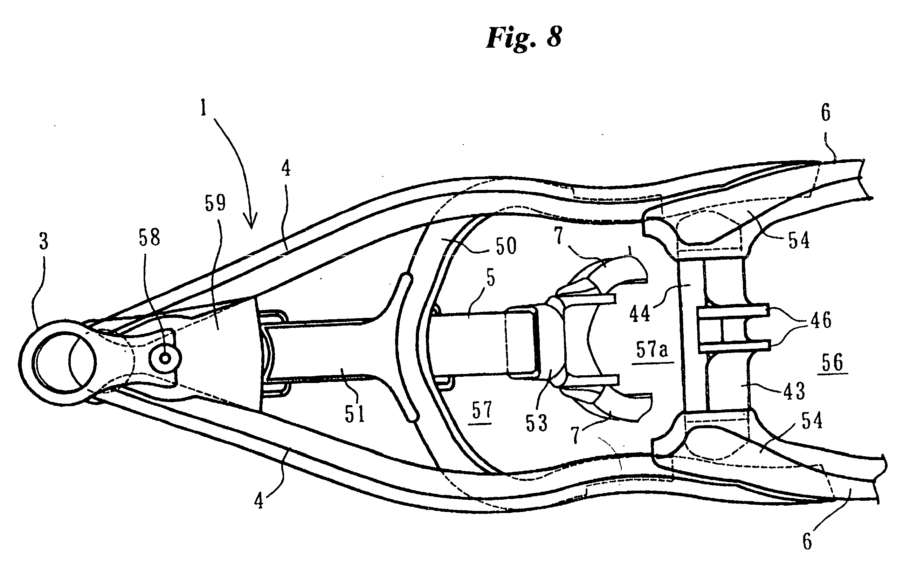

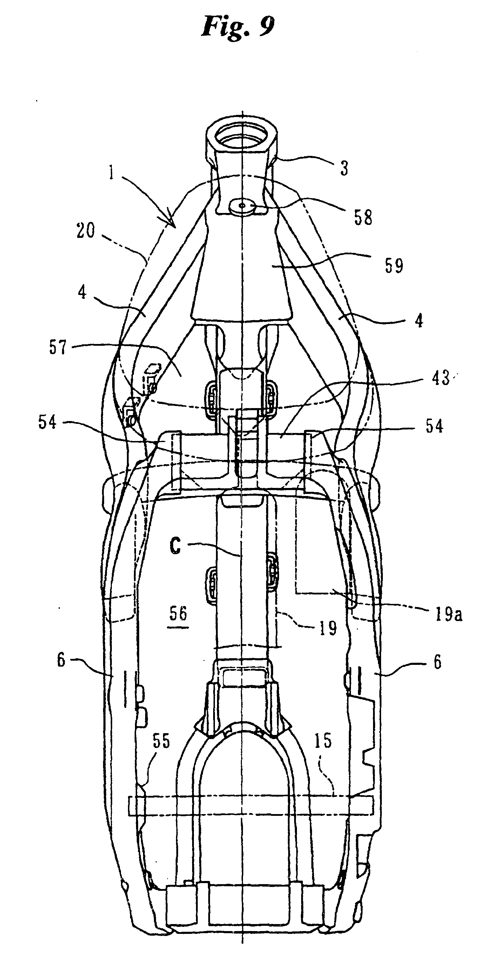

The pivot plates 6 are plate members constructed of aluminum alloy or cast metal, and upper ends form upwardly extending sections 54 projecting further up than the rear end of the main frame 4, with these sections sloping inwardly respectively to the left and right (refer to Fig. 8 and Fig. 9). Indentations are formed in opposite inner side surfaces of the left and right upwardly extending sections 54, and both ends of the rear cross member 43 are fitted into these indentations and welded. Also, pivot receiving sections are provided at lower side positions in the middle of the left and right pivot plates 6, and both ends of a pivot shaft 15 are supported in these receiving sections.

The rear cross member 43 is a hollow member obtained by casting or molding aluminum alloy or the like, and an upper surface 44 of the rear cross member constitutes a support section on which a rear end 45 of the fuel tank is placed and supported. Also, a cushion bracket 46 protruding in a bifurcated shape towards the rear is integrally formed in a central section, and an upper end of the rear cushion 19 is rotatably supported on the cushion bracket 56. This cushion bracket 46 is slightly offset from the center of the vehicle, but is provided at a position where the offset is minimum. Attachment holes 46a (Fig. 4) for attachment of the seat rail 8 are formed on an upper section of the cushion bracket 46.

A space 56 (Fig. 6) formed between the underneath of the rear cross member 43, the left and right pivot plates 6 and a lower pivot shaft 14 forms an extremely large continuous space, and the rear cushion 19, exhaust pipe 23 and connecting tube 36 are all arranged in this space, as shown in Fig. 6. A large continuous fuel tank storage space 57 (Fig. 8) is also formed further forward than the rear cross member 43, higher than the tension pipe 50 and further to the rear than the head pipe 3, and in part of this space a cylinder rear space 57a is formed to the rear side of the cylinder head cover 28 of the engine 2 (Fig. 3).

Reference numeral 59 in Fig. 8 and Fig. 9 is an attachment boss for the bracket 40 integrally formed with the head pipe 3, and 59 is a cross member integrally formed with a rear section of the head pipe 3 and extending rearwards, securing contact sections of the left and right main frames 4. Also, reference numeral 53a in Fig. 7 is an engine support stay provided on the joint member 53, while reference numeral 7a in Fig. 7 is an engine support stay provided on the lower frame 7.

Next, operation of this embodiment will be described. With this embodiment, since the rear cross member 43 is suspended between upward extending sections 54 of the left and right pivot plates 6, a specified vehicle rigidity is sufficiently maintained, and it is possible to maintain the large connecting space 56 below the rear cross member 43. Therefore, as shown in Fig. 6, using this large space 56 arrangement of the carburetor 24 and connecting tube 36 etc. making up the rear cushion 19 and the intake passageway 23 is made easy.

Therefore, it is possible to obtain a vehicle frame with a large degree of freedom with respect to layout of the above described components, with a simple structure having upwardly extending sections 54, extending upwards higher than rear sections of the main frame 4, provided on the left and right pivot plates 6, and simply changing the position of the rear cross member 43 to a high position so that it is suspended between these two upwardly extending sections.

Also, even if the position of the intake passageway becomes higher as a result of the cylinder head 27 position jutting out a lot at the top, as the case if the engine 2 is a 4-cycle engine, arrangement of the intake passageway can be made easier.

Further, a fuel tank storage space 57 further forward than the rear cross member 43 can also be ensured, which means that the fuel tank 20 can be stored in this space, and it is possible to make the volume of the fuel tank 20 large. Also, by making an upper surface 44 of the rear cross member 43 a support member for a rear end 45 of the fuel tank 20, it is possible to simply and reliably support the fuel tank 20, even if it has a large volume.

The present invention is not limited to the above described embodiment, and various modifications and adaptations are possible within the scope of the invention as defined in the claims. For example, it is possible to have part of the air cleaner as a constituent of the intake passageway arranged inside the space 56.

## Claims

1. A motorcycle with a frame (1) comprising a head pipe (3) for rotatably supporting a front fork (11), a pair of left and right main frames (4), having a hollow oblong cross section and extending rearwards above an engine (2), and a pair of left and right pivot plates (6), for swingably supporting a front end of a rear swingarm (16), joined to respective rear end sections of the main frames (4) and arranged vertically behind the engine (2), the left and right pivot plates (6) having upper end sections which are upwardly extending sections (54) extending further upwards than the rear end sections of the main frames (4), **characterized in that** a rear cross member (43) is provided between said left and right upwardly extending sections (54), said rear cross member (43) being positioned higher up than an intake passageway (23) of the engine (2).

2. The motorcycle of claim 1, wherein an upper part of a rear cushion (19) constituting a rear wheel suspension is supported on the rear cross member (43).

3. The motorcycle of claim 1, wherein the engine (2) is a four-cycle engine.

4. The motorcycle of claim 1, wherein a fuel tank support section (44) is provided on the rear cross member (43).

## Patentansprüche

1. Motorrad mit einem Rahmen (1), umfassend ein oberes Rohr (3) zum drehbaren Halten einer Vorderradgabel (11), ein Paar linker und rechter Hauptrahmen (4), die einen hohlen länglichen Querschnitt haben und sich über einem Motor (2) nach hinten erstrecken, und ein Paar linker und rechter Drehplatten (6) zum schwenkbaren Halten eines vorderen Endes eines hinteren Schwenkarms (16), welche mit entsprechenden hinteren Endabschnitten der Hauptrahmen (4) verbunden und vertikal hinter dem Motor (2) angeordnet sind, wobei die linke und die rechte Drehplatte (6) obere Endabschnitte aufweisen, die nach oben verlaufende Abschnitte (54) sind, welche sich weiter nach oben erstrecken als die hinteren Endabschnitte der Hauptrahmen (4), **dadurch gekennzeichnet, dass** zwischen dem linken und dem rechten nach oben verlaufenden Abschnitt (54) ein hinterer Querträger (43) vorgesehen ist, wobei der hintere Querträger (43) in einer höheren Lage als ein Einlassdurchgang (23) des Motors (2) positioniert ist.

2. Motorrad nach Anspruch 1, wobei ein oberer Teil eines hinteren Auflagers (19), das eine Hinterradaufhängung bildet, am hinteren Querträger (43) abgestützt ist.

3. Motorrad nach Anspruch 1, wobei der Motor (2) ein Viertaktmotor ist.

4. Motorrad nach Anspruch 1, wobei am hinteren Querträger (43) ein Kraftstofftank-Halterungsabschnitt (44) vorgesehen ist.

## Revendications

1. Motocyclette équipée d'un cadre (1) comprenant un fourreau (3) pour supporter de manière rotative une fourche avant (11), une paire de cadres principaux gauche et droit (4), présentant une coupe transversale allongée et creuse et s'étendant vers l'arrière au-dessus d'un moteur (2), et une paire de plaques de pivot (6) gauche et droite, pour supporter de manière oscillante la partie avant d'un bras oscillant arrière (16), relié aux sections d'extrémités arrières respectives des cadres principaux (4) et positionné de manière verticale derrière le moteur (2), les plaques de pivot (6) gauche et droite ayant des sections d'extrémité supérieure qui sont des sections extensibles vers le haut (54), s'étendant davantage vers le haut que les sections d'extrémité arrière des cadres principaux (4), **caractérisé en ce qu'**une traverse arrière (43) est fournie entre les dites sections gauche et droite extensibles vers le haut (54), ladite traverse arrière (43) étant positionnée plus haut qu'un passage d'admission (23) du moteur (2).

2. Motocyclette selon la revendication 1, dans laquelle une partie supérieure d'un amortisseur à fluide arrière (19) constituant une suspension de roue arrière est supportée sur la traverse arrière (43).

3. Motocyclette selon la revendication 1, dans laquelle le moteur (2) est un moteur à 4 temps.

4. Motocyclette selon la revendication 1, dans laquelle une section de support de réservoir à carburant (44) est fournie sur la traverse arrière (43).
